# FASCICULE DE BREVET EUROPEEN

(11) **EP 3 811 380 B1**
(45) Date de publication et mention de la délivrance du brevet: **17.04.2024**
(21) Numéro de dépôt: 19732356.1
(22) Date de dépôt: 20.06.2019
(51) Int. Cl.: G21F 3/02, G06F 3/01, G06F 1/16

(54) **PROCÉDÉ ET ENSEMBLE D'INTERVENTION DANS UNE ZONE RADIOACTIVE**
VERFAHREN UND ANORDNUNG ZUR INTERVENTION IN EINER RADIOAKTIVEN ZONE
METHOD AND ASSEMBLY FOR INTERVENTION IN A RADIOACTIVE ZONE

(30) Priorité: 22.06.2018 FR 1855601
(43) Date de publication de la demande: 28.04.2021
(73) Titulaire: Framatome, 92400 Courbevoie (FR)
(72) Inventeur: PONS, Guillaume, 26600 MERCUROL-VEAUNES (FR); GREMBER, Franck, 69003 LYON (FR); CASTELEIRA, Audrey, 69003 LYON (FR)
(74) Mandataire: Lavoix
(86) Numéro de dépôt international: PCT/EP2019/066405
(87) Numéro de publication internationale: WO 2019/243543

(56) Documents cités:
- CN-A- 105 639 818
- US-A1- 2015 294 506
- US-A1- 2016 203 240

## Description

La présente invention concerne les opérations d'intervention dans une zone radioactive.

Dans le cadre d'opérations de maintenance effectuées dans des installations nucléaires, les opérateurs travaillant en zone contrôlée sont exposés à plusieurs types de risques :
- risque radiologique (débit de dose ambiant, points chauds, contamination radiologique).
- sécurité classique (chutes de plain-pied, manutention de charge, travaux en hauteur, risque d'anoxie, brulure, etc...).

La prise en compte de ces différents risques permet de réaliser une opération de maintenance en toute sécurité, tout en limitant la dose intégrée au strict nécessaire (principe ALARA).

Beaucoup de ces risques sont indétectables par les sens humains (contamination, rayonnements ionisants), ou peuvent être masqués par l'environnement de travail (risque de chute dans une ouverture de plancher, zone d'interdiction de circulation lors des opérations de manutention de charge, ou plus généralement toute situation à risques ne pouvant faire l'objet d'une signalétique permanente). Par ailleurs, les équipements de protection peuvent limiter le champ de vision de l'opérateur, ce qui accroit encore le risque en cas de manutention de charge, ou empêche les opérateurs de consulter leurs dosimètres opérationnels.

Actuellement, les risques sont traités de la manière suivante.
- Le risque d'irradiation est couvert par l'utilisation d'un radiamètre et le port d'un dosimètre opérationnel par chaque intervenant. Des alarmes sonores et lumineuses peuvent prévenir l'opérateur en cas de dépassement d'un seuil prédéfini.
- Le risque de contamination est couvert par la réalisation de mesures par un contaminamètre portatif ou l'utilisation éventuelle d'une balise aérosol permettant de mesurer respectivement le niveau de contamination fixée ou atmosphérique.
- Les risques matériels classiques sont matérialisés physiquement, par la mise en place d'un balisage physique dans le cas d'une ouverture dans le plancher ou d'une zone de manutention de charges lourdes.

Par ailleurs, avant le début des opérations en zones contrôlées :
- une cartographie préliminaire sur papier (dosimétrie et niveau de contamination) est transmise aux intervenants ou affichée à l'entrée du local de travail ; cette cartographie est réalisée par le service SPR (Service de Prévention des Risques) ; dans le cas où la zone comporte des points chauds (points de forte irradiation ou de forte contamination radiologique), une signalétique normée (trisecteur colorisé et valeur de débit de dose au niveau des points chauds) peut être mise en place par le service SPR ;
- les risques classiques sont évoqués oralement lors des visites préalables ou lors des dernières réunions de mise au point, juste avant l'intervention.

Des solutions techniques ont récemment été proposées pour limiter les risques pendant les interventions en zones radioactives.

Une première solution consiste à assurer une surveillance complémentaire visuelle et phonique, via une baie de supervision extérieure, avec un suivi télédosimétrique des opérateurs par le superviseur. Ce système est particulièrement bien adapté au cas d'interventions en fond de piscine ou d'interventions demandant le port de TEV (Tenue Etanche Ventilée).

Selon une seconde solution existante, un poste de supervision et de prévention des risques permet d'interconnecter des caméras, de la télédosimètre ou d'autres capteurs, et d'archiver les données dans une application de supervision.

L'approche actuelle, en dépit des améliorations apportées par les solutions techniques ci-dessus, présentent des inconvénients importants.

Concernant les risques liés à la dosimétrie :
- l'opérateur s'appuie sur des états mesurés antérieurement (cartographie papier qui a pu évoluer depuis les derniers relevés), et il est obligé de contrôler la dosimétrie de son périmètre d'intervention à l'aide d'un radiamètre ;
- le partage de cette information avec les autres opérateurs est fait oralement et ne prend pas en compte les potentiels changements de configuration de la situation radiologique du local en cours d'intervention ;
- il n'y a pas de matérialisation de points de repli de type ALARA (points de la zone d'intervention où le débit de dose est minimum), par méconnaissance de la cartographie des débits de dose, notamment dans les environnements à forte irradiation tels que les piscines de réacteur ;
- suivant le type de tenue portée, la dosimétrie individuelle opérationnelle est difficile à lire en temps réel et est souvent contrôlée en fin de poste, sauf en cas d'utilisation de télédosimètres ou d'un système de phonie d'appoint permettant une information orale du superviseur vers les opérateurs ;
- dans le cas de la seconde solution technique mentionnée ci-dessus, les systèmes de phonie, supervision et télédosimétrie sont directement impactés par les problèmes de transmission de données par ondes électromagnétiques rencontrés en bâtiment réacteur, notamment les perturbations induites par le liner métallique de la piscine réacteur ou les massifs de béton de forte épaisseur séparant physiquement les différents locaux.

Concernant les risques liés à la contamination, la situation est sensiblement la même que pour les risques liés à la dosimétrie.

Concernant les risques classiques :
- ces risques sont évalués en visite préalable de chantier, lors de réunions de mise au point ;
- aucune cartographie, même papier, ne stipule la localisation des risques ou leur évolution ;
- seule une communication phonique lors d'une intervention d'un opérateur en TEV (Tenue Etanche Ventilée) peut permettre à cet opérateur de partager ces risques avec les autres opérateurs travaillant avec lui, directement ou via le superviseur.

Ainsi, l'information sur ces différents risques :
- n'est pas traitée en temps réel ;
- est difficilement matérialisable ;
- est partagée oralement seulement.

US2015/294506 A1 divulgue un procédé d'intervention d'au moins un opérateur dans une zone radioactive, avec mesure de l'intensité du rayonnement radioactif par un ou plusieurs détecteurs.

US2016/203240 A1 divulgue un procédé de modélisation d'une zone radioactive, générant une cartographie 3D combinant à la fois des données topographiques et des données radiologiques.

CN105639818 A décrit un casque de réalité virtuelle.

Dans ce contexte, l'invention selon un premier aspect vise à proposer un procédé d'intervention dans une zone radioactive permettant de mieux gérer les risques, notamment les risques liés à l'irradiation.

A cette fin, l'invention porte sur un procédé d'intervention d'au moins un opérateur dans une zone radioactive selon la revendication 1.

Du fait que les mesures enregistrées sont matérialisées dans un dispositif de réalité augmentée porté par l'au moins un opérateur, celui-ci a accès aux données de manière simple, et il connaît en temps réel le débit de dose dans son environnement.

L'utilisation de symboles holographiques discrets, indiquant l'intensité du rayonnement radioactif, placés de manière à apparaître pour l'au moins un opérateur aux coordonnées spatiales correspondantes, permet de lui transmettre l'information de manière lisible. Cette information n'est pas lisible quand elle est transmise sous la forme d'un nuage de points remplissant tout l'espace de la zone.

Au contraire, l'invention prévoit de ne matérialiser les mesures de débit de doses qu'en un nombre limités de points, typiquement le long du chemin parcouru par l'opérateur dans la zone radioactive quand le détecteur portable est porté par l'opérateur.

Le procédé de l'invention peut également être selon l'une des revendications dépendantes 2 à 9.

Selon un second aspect, l'invention porte sur un ensemble d'intervention pour au moins un opérateur dans une zone radioactive selon la revendication 10.

D'autres caractéristiques et avantages de l'invention ressortiront de la description détaillée qui en est donnée ci-dessous, à titre indicatif et nullement limitatif, en référence aux figures annexées, parmi lesquelles :
- La figure 1 est une représentation schématique simplifiée de l'ensemble d'intervention de l'invention ;
- La figure 2 est un zoom sur un élément de la figure 1 ; et
- La figure 3 est une vue en perspective illustrant les hologrammes ajoutés par le dispositif de vision augmentée dans le champ de vision des opérateurs.

L'invention concerne donc un procédé d'intervention d'au moins un opérateur dans une zone radioactive 1.

Cette zone est appelée radioactive au sens où elle se trouve dans une installation contenant des matières radioactives. Elle contient elle-même de la matière radioactive, ou est susceptible d'en contenir.

L'installation est une INB (Installation Nucléaire de Base), telle qu'un réacteur nucléaire, une installation du cycle du combustible nucléaire ou encore un laboratoire. En variante, l'installation est une ICPE (Installation Classée pour la Protection de l'Environnement) ou toute autre installation.

La zone est de tout type. Cette zone est par exemple une piscine de réacteur, une cellule chaude ou tout local classé en zone contaminée d'une INB ouvrant accès à une opération de maintenance.

L'intervention vise à réaliser toute sorte de travaux dans la zone radioactive : travaux de maintenance, de nettoyage, de démantèlement, etc

L'intervention est effectuée par un opérateur unique ou au contraire par une équipe de plusieurs opérateurs intervenant en même temps ou successivement dans la zone radioactive 1.

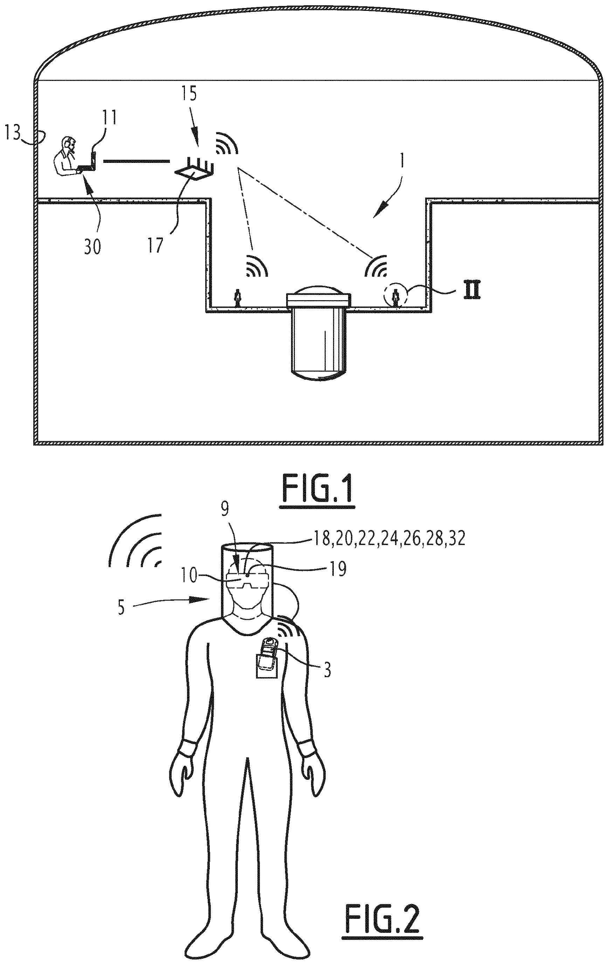

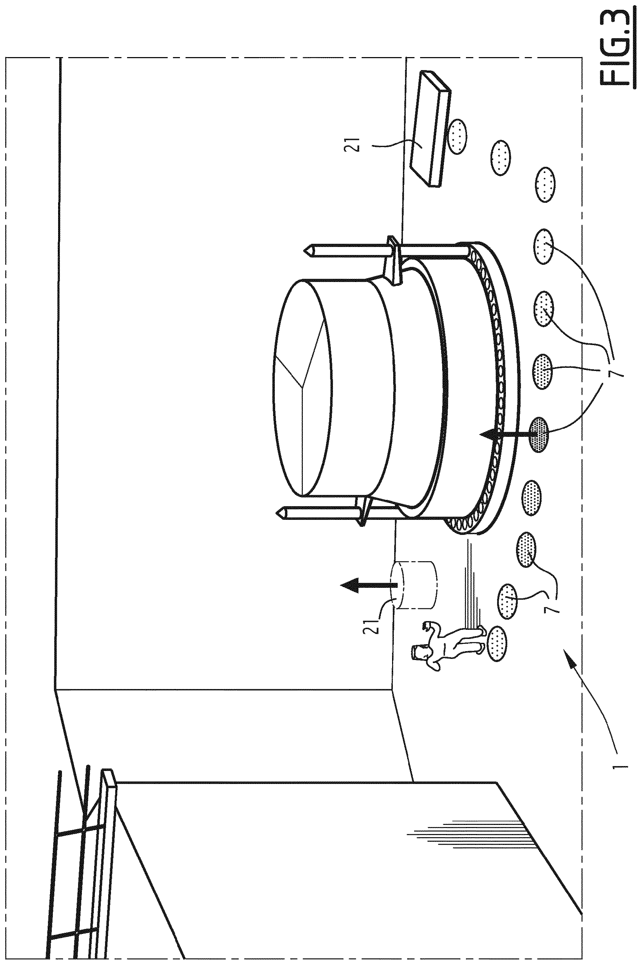

Le procédé comprend au moins les étapes suivantes :
- obtention d'un modèle numérique représentant la topographie en trois dimensions de la zone radioactive 1 ;
- intervention de l'au moins un opérateur dans la zone radioactive 1, l'étape d'intervention comprenant au moins les sous-étapes suivantes :
   * de manière répétée, mesure d'une d'intensité du rayonnement radioactif par un détecteur portable 3 (figure 2), et détermination des coordonnées spatiales du détecteur portable 3 au moment de la mesure ;
   * enregistrement dans le modèle numérique d'une pluralité desdites mesures et des coordonnées spatiales correspondantes ;
   * matérialisation des mesures enregistrées dans un dispositif de réalité augmentée 5 (figure 2) porté par l'au moins un opérateur, par une pluralité de symboles holographiques discrets 7 (figure 3), en utilisant le modèle numérique, chaque symbole holographique 7 indiquant l'intensité du rayonnement radioactif d'une des mesures enregistrées et étant placé de manière à apparaître de manière visible pour l'au moins un opérateur aux coordonnées spatiales correspondantes.

Le détecteur portable 3 est porté par l'au moins un opérateur. Il est configuré pour mesurer le débit de dose à l'endroit où se tient l'opérateur.

Typiquement, l'intensité du rayonnement radioactif est mesurée en continu par le détecteur portable 3.

Quand plusieurs opérateurs interviennent, chaque opérateur est équipé d'un détecteur portable 3.

Le détecteur portable est de tout type adapté. Il est prévu par exemple pour mesurer les rayonnements γ, ou β, ou tout autre type de rayonnement.

Le dispositif de réalité augmentée 5 comprend typiquement un casque 9 porté par l'au moins un opérateur, avec une surface d'affichage 10 translucide placée devant les yeux de l'au moins un opérateur.

Par exemple, le dispositif de réalité augmentée 5 est du type Microsoft Hololens^{®}.

Typiquement, chaque opérateur est équipé d'un dispositif de réalité augmentée 5 du type ci-dessus, avec un casque 9.

Un poste de supervision 11 (figure 1) est placé à distance de la zone radioactive 1, par exemple dans une salle 13 où les conditions radiologiques permettent une présence permanente. Des moyens de communication 15 sont configurés pour permettre l'échange de données entre le ou chaque dispositif de réalité augmentée 5 et le poste de supervision 11.

Dans l'exemple représenté sur la figure 1, les moyens de communication 15 comprennent un ou plusieurs émetteurs/récepteurs wifi 17, raccordé(s) de manière filaire au poste de supervision 11, par exemple par une liaison de type RJ45.

Le ou chaque dispositif de réalité augmentée 5 (figure 2) est équipé d'un module de communication wifi, permettant d'envoyer ou de recevoir des données au ou à chaque émetteur/récepteur wifi 17.

Le détecteur portable 3 porté par l'opérateur communique avec le dispositif de réalité augmentée 5 porté par ledit opérateur, de préférence selon un protocole de communication Bluetooth.

Un opérateur supplémentaire, appelé superviseur, gère le poste de supervision 11. Il est de préférence équipé lui aussi d'un dispositif de réalité augmentée 5, du même type que celui porté par le ou chaque autre opérateur, ou d'un casque de réalité virtuelle, ou d'un ordinateur permettant de visualiser les images vues par les opérateurs.

La détermination des coordonnées spatiales du détecteur portable 3 au moment de la mesure de l'intensité du rayonnement radioactif est réalisée par un module de géolocalisation 18, typiquement intégré au dispositif de réalité augmentée 5 (figure 2). En variante, ce module est indépendant du dispositif de réalité augmentée 5.

Le modèle numérique représente la topographie, c'est-à-dire la géométrie, de toute la zone radioactive 1, ou de seulement une partie de la zone radioactive 1. Il décrit à la fois les structures de génie civil et les équipements disposés dans la zone radioactive 1.

Le modèle numérique est stocké dans le dispositif de réalité augmentée 5. Quand plusieurs opérateurs interviennent, il est stocké dans le dispositif de réalité augmentée 5 de chacun des opérateurs. Il est modifié simultanément dans chaque dispositif de réalité augmentée 5.

En variante, il est stocké dans le poste de supervision 11, ou dans tout autre espace de stockage numérique adapté accessible par les dispositifs de réalité augmentée 5 de tous les opérateurs.

L'étape d'obtention du modèle numérique comprend :
- une sous-étape d'enregistrement d'images de la zone radioactive 1 avec une ou plusieurs caméras 19, et
- une sous-étape de détermination du modèle numérique en utilisant les images enregistrées.

La ou chaque caméra 19 est portée par l'opérateur. Avantageusement, elle fait partie du casque 9 du dispositif de réalité augmentée 5 (figure 2).

La détermination du modèle numérique en utilisant les images enregistrées est effectuée par le dispositif de réalité augmentée. Cette fonctionnalité existe dans le dispositif de réalité augmentée Microsoft Hololens^{®}. La méthode de détermination du modèle numérique ne sera donc pas décrite en détails ici.

L'étape d'obtention du modèle numérique est effectuée simultanément avec l'étape d'intervention, le modèle numérique étant progressivement déterminé ou enrichi avec les images enregistrées pendant l'étape d'intervention.

Plus précisément, lors de la première intervention d'un opérateur dans la zone radioactive 1, les images enregistrées par la ou chaque caméra portée 19 par l'opérateur servent à créer le modèle numérique.

Lors des interventions suivantes de l'opérateur, les images supplémentaires enregistrées par la ou chaque caméra 19 portée par l'opérateur servent à enrichir le modèle numérique, c'est-à-dire à le compléter ou à le rendre plus précis. Notamment, les images enregistrées servent à étendre le modèle numérique de manière à ce que celui-ci représente des parties ou des équipements de la zone radioactive non encore couverts à la fin de la première intervention.

Comme décrit plus haut, le modèle numérique est avantageusement partagé par les opérateurs.

On entend par là que le même modèle numérique est stocké dans chaque dispositif de réalité augmentée 5. Les modifications apportées au modèle commun sont effectuées simultanément dans tous les dispositifs de réalité augmentée, quelle que soit l'origine des modifications.

Notamment, lors des interventions de chaque opérateur, les images enregistrées par la caméra portée par ledit opérateur servent à enrichir le modèle numérique commun.

L'enregistrement d'une des mesures et sa matérialisation par un symbole holographique sont de préférence déclenchés par l'au moins un opérateur, ledit symbole holographique discret matérialisant l'intensité du rayonnement radioactif mesuré par le détecteur portable 3 au moment du déclenchement.

Le déclenchement est par exemple effectué par un geste de la main de l'opérateur devant la caméra 19. Ceci est particulièrement commode quand l'opérateur porte une tenue de protection comme une TEV.

En variante, le déclenchement est effectué en pressant un bouton, vocalement, ou par tout autre moyens.

Les symboles holographiques 7 sont affichés sur la surface d'affichage 10 de manière à apparaître pour l'au moins un opérateur aux coordonnées spatiales déterminées correspondantes.

Par exemple, chaque symbole holographique 7 est un point de couleur placé sur le sol, comme illustré sur la figure 3. Le point est un disque, ou un rectangle ou présente toute autre forme adaptée. Il est sans épaisseur, ou au contraire présente une hauteur non nulle.

Avantageusement, la mesure enregistrée est indiquée numériquement sur le point, de manière lisible pour l'opérateur.

La couleur du point est choisie en fonction de la valeur de la mesure enregistrée. Elle respecte par exemple la norme colorimétrique en vigueur dans l'installation nucléaire de base où est effectuée l'intervention.

Par exemple, le point est :
- bleu quand le débit équivalent de dose mesuré est compris entre 0.5 µSv/h et 7.5 µSv/h ;
- vert quand le débit équivalent de dose mesuré est compris entre 7.5 µSv/h et 25 µSv/h ;
- jaune quand le débit équivalent de dose mesuré est compris entre 25 µSv/h et 2 mSv/h ;
- orange quand le débit équivalent de dose mesuré est compris entre 2 mSv/h et 100mSv/h ;
- rouge quand le débit équivalent de dose mesuré est supérieur à 100 mSv/h.

Le symbole holographique 7 est avantageusement différent quand la mesure enregistrée dépasse un seuil prédéterminé, par exemple 2.5 mSv/h. Le symbole holographique 7 dans ce cas est choisi pour être très visible, de manière à signaler la présence d'un point chaud. Dans l'exemple représenté sur la figure 3, ce symbole est un point rouge sur le sol, avec un triangle rouge au-dessus du point, relié au point par un trait vertical noir.

Le symbole holographique 7 est choisi et positionné automatiquement par le dispositif de réalité augmenté 5.

Les symboles holographiques 7 sont qualifiés de discrets car ils sont distinct les uns des autres et séparés les uns des autres. Ils ne forment pas ensemble un volume continu représentant la distribution spatiale de débit de dose dans toute la zone radioactive. L'opérateur ne voit qu'un petit nombre de symboles holographiques, créés par lui ou par les autres opérateurs.

Typiquement, ces symboles holographiques seront répartis le long de son parcours dans la zone radioactive 1, entre le point d'entrée dans la zone radioactive 1 et les différents postes de travail.

Selon une variante avantageuse, l'ajout d'un symbole holographique discret 7 dans le dispositif de réalité augmenté 5 est déclenché quand l'intensité du rayonnement radioactif mesuré par le détecteur portable 3 est supérieure à une valeur prédéterminée.

Ce déclenchement est automatique.

Selon une variante de réalisation, l'ajout d'un symbole est déclenché quand l'intensité du rayonnement radioactif mesuré par le détecteur portable 3 est supérieure à une valeur absolue, indépendante de la position de l'opérateur dans la zone radioactive. Cette valeur est par exemple enregistrée dans détecteur 3.

Selon une autre variante, une carte de la distribution spatiale de débit de dose dans toute la zone radioactive est enregistrée avant l'intervention, par exemple dans le même espace de stockage numérique que le modèle numérique.

Un module de déclenchement automatique 20 (figure 2) compare de manière continue la mesure de l'intensité du rayonnement radioactif fournie par le détecteur portable et la mesure consignée sur la carte à l'endroit où se trouve le détecteur 3. La mesure consignée correspond à la valeur prédéterminée mentionnée ci-dessus. Si la mesure fournie par le détecteur portable est supérieure à la mesure consignée, le module de déclenchement automatique 20 déclenche automatiquement la sous-étape d'enregistrement et la sous-étape de matérialisation. Le symbole holographique ajouté est avantageusement différent des autres, de manière à attirer l'attention de l'opérateur.

Le module de déclenchement automatique 20 est par exemple intégré dans le dispositif de réalité augmentée 5.

Quand plusieurs opérateurs interviennent tous dans la zone radioactive pendant l'étape d'intervention, l'étape d'intervention comprend au moins les sous-étapes suivantes :
- de manière répétée, mesure d'une d'intensité du rayonnement radioactif par le détecteur portable 3 porté par chaque opérateur, et détermination des coordonnées spatiales du détecteur portable 3 au moment de la mesure ;
- enregistrement dans le modèle numérique commun d'une pluralité desdites mesures et des coordonnées spatiales correspondantes.

Ainsi, chaque opérateur alimente le modèle numérique commun avec des valeurs enregistrées.

Les opérateurs interviennent ensemble dans la zone radioactive, ou l'un après l'autre.

De plus, quand le modèle numérique est partagé entre plusieurs opérateurs, les symboles holographiques 7 sont placés par le dispositif de réalité augmentée 5 de chaque opérateur de manière à apparaître pour ledit opérateur aux coordonnées spatiales correspondantes.

Ainsi, chaque opérateur voit le symbole holographique discret à une distance et selon un angle fonction de sa position courante.

Selon un autre aspect, le procédé comprend une étape d'enregistrement dans le modèle numérique d'au moins un des éléments suivants associé à des coordonnées spatiales correspondantes : zone de repli ALARA, risque conventionnel non nucléaire.

Dans ce cas, l'étape d'intervention comprend une sous-étape de matérialisation de l'au moins un élément dans le dispositif de réalité augmentée par un symbole holographique spécifique 21 apparaissant pour l'opérateur aux coordonnées spatiales correspondantes (voir figure 3).

Le risque conventionnel est par exemple un trou dans le plancher créant un risque de chute pour l'opérateur, ou un cône de levage, c'est-à-dire un volume situé sous un organe de manutention de charges tel qu'un pont ou un palan.

Le symbole holographique spécifique peut être différent pour chaque type de risque de manière à ce que l'opérateur puisse comprendre la nature du risque en le voyant. Dans l'exemple illustré sur la figure 3, le symbole holographique spécifique 21 est un triangle rouge, semblable à un panneau de signalisation routière.

La zone de repli ALARA est une zone où le débit de dose est particulièrement faible. Les opérateurs peuvent s'y arrêter un long moment si nécessaire, pour y effectuer des tâches ne nécessitant pas leur présence en un point spécifique de la zone radioactive.

La zone de repli ALARA est par exemple matérialisée par un symbole holographique spécifique 21 de forme parallélépipédique. Le mot ALARA est inscrit sur le parallélépipède, de manière visible pour l'opérateur. La couleur du symbole holographique spécifique 21 est choisie en fonction du débit de dose au niveau de la zone de repli ALARA. Elle respecte par exemple la norme colorimétrique en vigueur dans l'installation nucléaire où est effectuée l'intervention, comme décrit plus haut.

Quand le modèle numérique est partagé entre plusieurs opérateurs, le dispositif de réalité augmentée de chaque opérateur fait apparaître le symbole holographique spécifique 21 pour ledit opérateur aux coordonnées spatiales correspondantes (voir figure 3).

L'étape d'enregistrement dans le modèle numérique est effectuée par le superviseur sur le poste de supervision 11, ou est effectuée par un des opérateurs. Par exemple, l'opérateur se place à l'endroit où le symbole holographique spécifique 21 doit apparaître et effectue un geste devant la caméra 19 du dispositif de réalité augmentée 5. Le geste à faire est différent en fonction du risque à signaler. Le dispositif de réalité augmentée 5 détecte et interprète le geste, et enregistre l'élément correspondant dans le modèle numérique, avec les coordonnées spatiales correspondantes fournies par le module de géolocalisation 18.

Il est à noter que chaque opérateur en variante est équipé d'un ou plusieurs autres détecteurs portables, par exemple un contaminamètre. Les mesures effectuées par le ou chaque autre détecteur portable, et les coordonnées spatiales correspondantes du détecteur portable au moment de la mesure, sont enregistrées dans le modèle numérique. Ces mesures sont elles aussi matérialisées par des symboles holographiques dans le dispositif de réalité augmentée.

L'invention porte également sur un ensemble d'intervention pour au moins un opérateur dans une zone radioactive 1. L'ensemble comprend (figure 2):
- un modèle numérique représentant la topographie en trois dimensions de la zone radioactive 1 ;
- au moins un détecteur portable 3 effectuant des mesures d'une intensité du rayonnement radioactif ;
- un module 18 de détermination des coordonnées spatiales du détecteur portable 3 au moment de chaque mesure ;
- un module 22 d'enregistrement dans le modèle numérique d'une pluralité desdites mesures et des coordonnées spatiales correspondantes ;
- un dispositif de réalité augmentée 5 porté par l'au moins un opérateur ;
- un module 24 de matérialisation des mesures enregistrées par une pluralité de symboles holographiques discrets dans le dispositif de réalité augmenté 5, en utilisant le modèle numérique.

Le module de matérialisation 24 est configuré pour que chaque symbole holographique discret indique l'intensité du rayonnement radioactif d'une des mesures enregistrées et soit placé de manière à apparaître de manière visible pour l'au moins un opérateur aux coordonnées spatiales correspondantes.

Le détecteur portable 3 et le module 18 de détermination des coordonnées spatiales du détecteur portable 3 sont comme décrit ci-dessus.

Le dispositif de réalité augmenté 5 est comme décrit ci-dessus. Il est typiquement du type Microsoft Hololens^{®}.

Le dispositif de réalité augmentée 5 comprend typiquement un casque 9 porté par l'au moins un opérateur, avec une surface d'affichage translucide placée devant les yeux de l'au moins un opérateur.

L'ensemble comporte de préférence un module 26 d'obtention du modèle numérique, comprenant lui-même :
- au moins une caméra 19 configurée pour enregistrer des images de la zone radioactive 1, et
- un sous-module 28 de détermination du modèle numérique en utilisant les images enregistrées.

La ou chaque caméra 19 est portée par l'opérateur. Avantageusement, elle fait partie du casque 9 du dispositif de réalité augmentée 5.

Le sous-module 28 de détermination du modèle numérique en utilisant les images enregistrées est intégré dans le dispositif de réalité augmentée. Cette fonctionnalité existe dans le système de réalité augmentée Microsoft Hololens^{®}. La méthode de détermination du modèle numérique ne sera donc pas décrite en détails ici.

Le module 22 d'enregistrement des mesures et des coordonnées spatiale est typiquement intégré dans le dispositif de réalité augmenté 5.

Le module de matérialisation 24 est typiquement intégré dans le dispositif de réalité augmenté 5. Il est configuré pour que les symboles holographiques soient affichés sur la surface d'affichage 10 de manière à apparaître pour l'au moins un opérateur aux coordonnées spatiales déterminées correspondantes.

Les modules d'enregistrement et de matérialisation 22, 24 sont configurés pour que l'enregistrement d'une des mesures et sa matérialisation par un symbole holographique soient déclenchés par l'au moins un opérateur, ledit symbole holographique discret matérialisant l'intensité du rayonnement radioactif mesuré par le détecteur portable 3 au moment du déclenchement.

Les modules d'enregistrement et de matérialisation 22, 24 sont configurés pour que le déclenchement soit par exemple effectué par un geste de la main de l'opérateur devant la ou une caméra 19.

En variante, les modules d'enregistrement et de matérialisation 22, 24 sont configurés pour que le déclenchement soit effectué en pressant un bouton, vocalement ou par tout autre moyens.

Selon une variante avantageuse, l'ensemble d'intervention est configuré pour que l'ajout d'un symbole holographique discret 7 dans le dispositif de réalité augmenté 5 soit déclenché quand l'intensité du rayonnement radioactif mesuré par le détecteur portable 3 est supérieure à une valeur prédéterminée.

Ce déclenchement est automatique.

Selon une variante de réalisation, l'ensemble d'intervention est configuré pour que l'ajout d'un symbole soit déclenché quand l'intensité du rayonnement radioactif mesuré par le détecteur portable 3 est supérieure à une valeur absolue, indépendante de la position de l'opérateur dans la zone radioactive. Cette valeur est par exemple enregistrée dans le détecteur 3.

Selon une autre variante,, une carte de la distribution spatiale de débit de dose dans toute la zone radioactive est enregistrée avant l'intervention, par exemple dans le même espace de stockage numérique que le modèle numérique.

Un module de déclenchement automatique 20 compare de manière continue la mesure de l'intensité du rayonnement radioactif fournie par le détecteur portable et la mesure consignée sur la carte à l'endroit où se trouve le détecteur 3. La mesure consignée correspond à la valeur prédéterminée mentionnée ci-dessus. Si la mesure fournie par le détecteur portable est supérieure à la mesure consignée, le module de déclenchement automatique 20 déclenche automatiquement la sous-étape d'enregistrement et la sous-étape de matérialisation. Le symbole holographique ajouté est avantageusement différent des autres, de manière à attirer l'attention de l'opérateur.

Le module de déclenchement automatique 20 est par exemple intégré dans le dispositif de réalité augmentée 5.

Typiquement, l'ensemble comprend un organe de mesure 3 associé à un module 18 de détermination des coordonnées spatiales du détecteur portable 3 pour chaque opérateur. Il comprend également un dispositif de réalité augmentée 5, associé à des modules d'enregistrement et de matérialisation 22, 24, pour chaque opérateur.

L'ensemble comprend encore un poste de supervision 11 placé à distance de la zone radioactive 1, par exemple dans une salle 13 où les conditions radiologiques permettent une présence permanente (figure 1). L'ensemble comprend également des moyens de communication 15 configurés pour permettre l'échange de données entre le ou chaque dispositif de réalité augmentée 5 et le poste de supervision 11.

Le poste de supervision 11 est équipé de manière à transmettre toutes sortes d'informations aux opérateurs. Notamment, le superviseur peut assister les opérateurs en partageant leur flux audio, vidéo (images provenant des caméras frontales 19), communiquer avec eux, envoyer dans le champ de vision des opérateurs un flux d'informations permettant de les assister dans leur activité (mode opératoire ou plan sous format PNG, WORD ou PDF, flux vidéo issu d'une caméra externe, images, ainsi que le partage de l'écran superviseur complet, etc...). Il peut également réaliser à distance des contrôles règlementaires.

Les moyens de communication entre les dispositifs de réalité augmentée 5 et le poste de supervision 11 permettent également au superviseur de visualiser un ensemble de données transmises par les dispositifs de réalité augmentée 5:
- dosimétrie reçue par chaque opérateur, débit de dose ambiant de chaque opérateur et alarmes de seuils prédéfinies ;
- messages d'alertes liés à l'utilisation des détecteurs portables 3 ou des dispositifs de réalité augmentée 5 (notamment charge des batteries des appareils de chaque opérateur) ;
- qualité du réseau utilisé.

De préférence, l'ensemble comprend un module 30 d'enregistrement dans le modèle numérique d'au moins un des éléments suivants associé à des coordonnées spatiales correspondantes : zone de repli ALARA, risque conventionnel non nucléaire.

Dans ce cas, le module de matérialisation 24 comprend un sous-module 32 de matérialisation de l'au moins un élément dans le dispositif de réalité augmentée par un symbole holographique spécifique 21 apparaissant pour l'opérateur aux coordonnées spatiales correspondantes (voir figure 3).

Ledit module 30 d'enregistrement dans le modèle numérique est intégré dans le poste de supervision 11, ou est intégré dans chaque dispositif de réalité augmentée 5. Dans ce dernier cas il est configuré pour que l'opérateur se place à l'endroit où le symbole holographique spécifique 21 doit apparaître et effectue un geste devant la caméra 19 du dispositif de réalité augmentée 5. Le geste à faire est différent en fonction du risque à signaler. Le dispositif de réalité augmentée 5 détecte et interprète le geste, et enregistre l'élément correspondant dans le modèle numérique, avec les coordonnées spatiales correspondantes fournies par l'organe de géolocalisation 18.

Il est à noter que l'ensemble, en variante, comprend pour chaque opérateur un ou plusieurs autres détecteurs portables, par exemple un contaminamètre. Les modules d'enregistrement et de matérialisation sont configurés pour que les mesures effectuées par le ou chaque autre détecteur portable, et les coordonnées spatiales correspondantes du détecteur portable au moment de la mesure, soient enregistrées dans le modèle numérique. Les modules d'enregistrement et de matérialisation sont configurés pour que les mesures soient elles aussi matérialisées par des symboles holographiques dans le dispositif de réalité augmentée.

L'ensemble décrit ci-dessus est spécialement conçu pour la mise en oeuvre du procédé de l'invention. Inversement, le procédé de l'invention est particulièrement bien adapté pour une mise en oeuvre par l'ensemble qui vient d'être décrit.

L'invention a été décrite ci-dessus pour un mode de réalisation où le modèle numérique est obtenu pendant l'étape d'intervention, en utilisant des images provenant d'une ou plusieurs caméras portées par le ou les opérateurs. Selon un autre mode de réalisation, le modèle numérique est obtenu avant l'étape d'intervention, par exemple lors d'une campagne de prise de vues préalable. Il est chargé dans le ou les dispositifs de réalité augmentée 5 avant l'intervention.

Alternativement, cependant en dehors de l'objet des revendications, le procédé et l'ensemble divulgués pourraient également être utilisés pour simuler une intervention. Dans ce cas, une application informatique mobile pourrait générer des mesures d'intensité de rayonnement radioactif, remplaçant celles du dosimètre. Ces mesures seraient traitées comme décrit ci-dessus. Notamment, l'enregistrement et la matérialisation des mesures par des symboles holographiques seraient déclenchés par l'opérateur, comme lors d'une intervention réelle. Il serait possible ainsi de reproduire des points chauds ou des risques de sécurité classiques lors de sessions de formation.

## Revendications

1. Procédé d'intervention d'au moins un opérateur dans une zone radioactive (1), le procédé comprenant les étapes suivantes :
- obtention d'un modèle numérique représentant la topographie en trois dimensions de la zone radioactive (1) ;
- intervention de l'au moins un opérateur dans la zone radioactive (1), l'étape d'intervention comprenant au moins les sous-étapes suivantes :
* de manière répétée, mesure d'une d'intensité du rayonnement radioactif par un détecteur portable (3) porté par l'au moins un opérateur, et détermination des coordonnées spatiales du détecteur portable (3) au moment de la mesure ;
* enregistrement dans le modèle numérique d'une pluralité desdites mesures et des coordonnées spatiales correspondantes ;
* matérialisation des mesures enregistrées dans un dispositif de réalité augmentée (5) porté par l'au moins un opérateur, par une pluralité de symboles holographiques discrets (7), en utilisant le modèle numérique, chaque symbole holographique (7) indiquant l'intensité du rayonnement radioactif d'une des mesures enregistrées et étant placé de manière à apparaître de manière visible pour l'au moins un opérateur aux coordonnées spatiales correspondantes.

2. Procédé selon la revendication 1, dans lequel le dispositif de réalité augmentée (5) comprend au moins un casque (9) porté par l'au moins un opérateur, avec une surface d'affichage (10) translucide placée devant les yeux de l'au moins un opérateur, les symboles holographiques (7) étant affichés sur la surface d'affichage (10) de manière à apparaître de manière visible pour l'au moins un opérateur aux coordonnées spatiales déterminées correspondantes.

3. Procédé selon la revendication 1 ou 2, dans lequel l'étape d'obtention comprend une sous-étape d'enregistrement d'images de la zone radioactive (1) avec au moins une caméra (19), notamment l'au moins une caméra (19) portée par l'au moins un opérateur, et une sous-étape de détermination du modèle numérique en utilisant les images enregistrées.

4. Procédé selon la revendication 3, dans lequel l'étape d'obtention est effectuée simultanément avec l'étape d'intervention, le modèle numérique étant progressivement déterminé ou enrichi avec les images enregistrées pendant l'étape d'intervention.

5. Procédé selon l'une quelconque des revendications précédentes, dans lequel l'enregistrement d'une des mesures et sa matérialisation sont déclenchés par l'au moins un opérateur, ledit symbole holographique discret (7) matérialisant l'intensité du rayonnement radioactif mesuré par le détecteur portable (3) au moment du déclenchement.

6. Procédé selon l'une quelconque des revendications précédentes, dans lequel l'ajout d'un symbole holographique discret (7) dans le dispositif de réalité augmenté (5) est déclenché quand l'intensité du rayonnement radioactif mesuré par le détecteur portable (3) est supérieure à une valeur prédéterminée.

7. Procédé selon l'une quelconque des revendications précédentes, dans lequel :
- le procédé comprend une étape d'enregistrement dans le modèle numérique d'au moins un des éléments suivants associé à des coordonnées spatiales correspondantes : zone de repli ALARA, risque conventionnel non nucléaire ;
- l'étape d'intervention comprend une sous-étape de matérialisation de l'au moins un élément dans le dispositif de réalité augmentée (5) par un symbole holographique spécifique (21) apparaissant de manière visible pour l'opérateur aux coordonnées spatiales correspondantes.

8. Procédé selon l'une quelconque des revendications précédentes, dans lequel le modèle numérique est partagé par plusieurs opérateurs, chaque opérateur étant équipé d'un dispositif de réalité augmentée (5) matérialisant les mesures enregistrées par une pluralité de symboles holographiques discrets (7) en utilisant le modèle numérique, chaque symbole holographique (7) indiquant l'intensité du rayonnement radioactif d'une des mesures enregistrées et étant placé de manière à apparaître de manière visible pour ledit opérateur aux coordonnées spatiales correspondantes.

9. Procédé selon la revendication 8, dans lequel les opérateurs interviennent tous dans la zone radioactive (1) pendant l'étape d'intervention, l'étape d'intervention comprenant au moins les sous-étapes suivantes :
* de manière répétée, mesure d'une d'intensité du rayonnement radioactif par le détecteur portable (3) porté par chaque opérateur, et détermination des coordonnées spatiales du détecteur portable (3) au moment de la mesure ;
* enregistrement dans le modèle numérique commun d'une pluralité desdites mesures et des coordonnées spatiales correspondantes.

10. Ensemble d'intervention pour au moins un opérateur dans une zone radioactive (1), l'ensemble comprenant :
- un dispositif de réalité augmentée (5) apte à être porté par l'au moins un opérateur ;
- un modèle numérique représentant la topographie en trois dimensions de la zone radioactive (1), stocké dans le dispositif de réalité augmentée (5) du ou de chaque opérateur ou stocké dans un poste de supervision (11) ou stocké dans tout autre espace de stockage numérique adapté accessible par les dispositifs de réalité augmentée (5) de tous les opérateurs ;
- un détecteur portable (3) effectuant des mesures d'une intensité du rayonnement radioactif et apte à être porté par l'au moins un opérateur ;
- un module (18) de détermination des coordonnées spatiales du détecteur portable (3) au moment de chaque mesure ;
- un module (22) d'enregistrement dans le modèle numérique d'une pluralité desdites mesures et des coordonnées spatiales correspondantes ;
- un module (24) de matérialisation des mesures enregistrées par une pluralité de symboles holographiques discrets (7) dans le dispositif de réalité augmentée (5), en utilisant le modèle numérique, configuré pour que chaque symbole holographique (7) indique l'intensité du rayonnement radioactif d'une des mesures enregistrées et soit placé de manière à apparaître de manière visible pour l'au moins un opérateur aux coordonnées spatiales correspondantes.

## Patentansprüche

1. Verfahren zum Eingreifen mindestens eines Bedieners in einen radioaktiven Bereich (1), wobei das Verfahren die folgenden Schritte umfasst:
- Erhalt eines digitalen Modells, das die dreidimensionale Topografie des radioaktiven Bereichs (1) darstellt;
- Eingreifen des mindestens einen Bedieners in den radioaktiven Bereich (1), wobei der Eingriffsschritt mindestens die folgenden Teilschritte umfasst:
* wiederholtes Messen einer Intensität der radioaktiven Strahlung durch einen tragbaren Detektor (3), der von dem mindestens einen Bediener getragen wird, und Bestimmen der Raumkoordinaten des tragbaren Detektors (3) zum Zeitpunkt der Messung;
* Speichern einer Vielzahl der genannten Messungen und der entsprechenden Raumkoordinaten im digitalen Modell;
* Materialisierung der aufgezeichneten Messungen in einer Augmented-Reality-Vorrichtung (5), die von dem mindestens einen Bediener getragen wird, durch eine Vielzahl diskreter holographischer Symbole (7) unter Verwendung des digitalen Modells, wobei jedes holographische Symbol (7) die Intensität der radioaktiven Strahlung einer der aufgezeichneten Messungen anzeigt und so angeordnet ist, dass es für den mindestens einen Bediener an den entsprechenden Raumkoordinaten sichtbar erscheint.

2. Verfahren nach Anspruch 1, wobei die Augmented-Reality-Vorrichtung (5) mindestens einen Helm (9) umfasst, der von dem mindestens einen Bediener getragen wird, mit einer lichtdurchlässigen Anzeigefläche (10), die vor den Augen des mindestens einen Bedieners angeordnet ist, wobei die holographischen Symbole (7) auf der Anzeigefläche (10) so angezeigt werden, dass sie für den mindestens einen Bediener an den entsprechenden bestimmten Raumkoordinaten sichtbar erscheinen.

3. Verfahren nach Anspruch 1 oder 2, wobei der Schritt des Erhaltens einen Teilschritt des Aufnehmens von Bildern des radioaktiven Bereichs (1) mit mindestens einer Kamera (19) umfasst, insbesondere der mindestens einen Kamera (19), die von dem mindestens einen Bediener getragen wird, und einen Teilschritt des Bestimmens des digitalen Modells unter Verwendung der aufgenommenen Bilder.

4. Verfahren nach Anspruch 3, bei dem der Schritt des Erhaltens gleichzeitig mit dem Eingriffsschritt durchgeführt wird, wobei das digitale Modell schrittweise bestimmt oder mit den während des Eingriffsschritts aufgenommenen Bildern angereichert wird.

5. Verfahren nach einem der vorhergehenden Ansprüche, bei dem die Aufzeichnung einer der Messungen und ihre Materialisierung durch den mindestens einen Bediener ausgelöst werden, wobei das diskrete holographische Symbol (7) die Intensität der radioaktiven Strahlung materialisiert, die von dem tragbaren Detektor (3) zum Zeitpunkt der Auslösung gemessen wurde.

6. Verfahren nach einem der vorhergehenden Ansprüche, bei dem das Hinzufügen eines diskreten holographischen Symbols (7) in der Augmented-Reality-Vorrichtung (5) ausgelöst wird, wenn die Intensität der von dem tragbaren Detektor (3) gemessenen radioaktiven Strahlung über einem vorbestimmten Wert liegt.

7. Verfahren nach einem der vorherigen Ansprüche, wobei:
- das Verfahren einen Schritt umfasst, bei dem in dem digitalen Modell mindestens eines der folgenden Elemente in Verbindung mit entsprechenden Raumkoordinaten registriert wird: ALARA-Rückzugsgebiet, konventionelles nicht-nukleares Risiko;
- der Eingriffsschritt einen Teilschritt der Materialisierung des mindestens einen Elements in der Augmented-Reality-Vorrichtung (5) durch ein spezifisches holographisches Symbol (21) umfasst, das für den Bediener sichtbar an den entsprechenden Raumkoordinaten erscheint.

8. Verfahren nach einem der vorhergehenden Ansprüche, bei dem das digitale Modell von mehreren Bedienern gemeinsam genutzt wird, wobei jeder Bediener mit einer Augmented-Reality-Vorrichtung (5) ausgestattet ist, die die aufgezeichneten Messungen durch eine Vielzahl von diskreten holographischen Symbolen (7) unter Verwendung des digitalen Modells materialisiert, wobei jedes holographische Symbol (7) die Intensität der radioaktiven Strahlung einer der aufgezeichneten Messungen anzeigt und so angeordnet ist, dass es für den Bediener an den entsprechenden Raumkoordinaten sichtbar erscheint.

9. Verfahren nach Anspruch 8, wobei während des Eingriffsschritts alle Bediener in den radioaktiven Bereich (1) eingreifen, wobei der Eingriffsschritt mindestens die folgenden Teilschritte umfasst:
* wiederholtes Messen einer Intensität der radioaktiven Strahlung durch den tragbaren Detektor (3), der von jedem Bediener getragen wird, und Bestimmen der Raumkoordinaten des tragbaren Detektors (3) zum Zeitpunkt der Messung;
* Speicherung einer Vielzahl der genannten Messungen und der entsprechenden Raumkoordinaten im gemeinsamen digitalen Modell.

10. Eingriffsanordnung für mindestens einen Bediener in einem radioaktiven Bereich (1), wobei die Anordnung umfasst:
- eine Augmented-Reality-Vorrichtung (5), die dazu geeignet ist, von dem mindestens einen Bediener getragen zu werden;
- ein digitales Modell, das die dreidimensionale Topographie des radioaktiven Bereichs (1) darstellt, gespeichert in der Augmented-Reality-Vorrichtung (5) des oder jedes Bedieners oder gespeichert in einer Überwachungsstation (11) oder gespeichert an jedem anderen geeigneten digitalen Speicherplatz, auf den die Augmented-Reality-Geräte (5) aller Bediener zugreifen können;
- einen tragbaren Detektor (3), der Messungen einer Intensität der radioaktiven Strahlung durchführt und geeignet ist, von dem mindestens einen Bediener getragen zu werden;
- ein Modul (18) zur Bestimmung der Raumkoordinaten des tragbaren Detektors (3) zum Zeitpunkt jeder Messung;
- ein Modul (22) zum Speichern einer Vielzahl der Messungen und der entsprechenden Raumkoordinaten in dem digitalen Modell;
- ein Modul (24) zur Materialisierung der aufgezeichneten Messungen durch eine Vielzahl diskreter holographischer Symbole (7) in der Augmented-Reality-Vorrichtung (5) unter Verwendung des digitalen Modells, das so konfiguriert ist, dass jedes holographische Symbol (7) die Intensität der radioaktiven Strahlung einer der aufgezeichneten Messungen anzeigt und so platziert ist, dass es für den mindestens einen Bediener an den entsprechenden Raumkoordinaten sichtbar erscheint.

## Claims

1. A method of intervention by at least one operator in a radioactive zone (1), the method comprising the following steps:
- obtaining a digital model representing the three-dimensional topography of the radioactive zone (1);
- intervention of at least one operator in the radioactive zone (1), the intervention step comprising at least the following sub-steps:
* repeatedly, measuring an intensity of the radioactive radiation by a portable detector (3) carried by the at least one operator, and determining the spatial coordinates of the portable detector (3) at the time of measurement;
* recording in the digital model of a plurality of said measurements and the corresponding spatial coordinates ;
* materialisation of the recorded measurements in an augmented reality device (5) carried by the at least one operator, by a plurality of discrete holographic symbols (7), using the digital model, each holographic symbol (7) indicating the intensity of the radioactive radiation of one of the recorded measurements and being placed so as to appear visible to the at least one operator at the corresponding spatial coordinates.

2. The method according to claim 1, wherein the augmented reality device (5) comprises at least one helmet (9) worn by the at least one operator, with a translucent display surface (10) placed in front of the eyes of the at least one operator, wherein the holographic symbols (7) are displayed on the display surface (10) in such a way that they appear visible to the at least one operator at the corresponding determined spatial coordinates.

3. The method according to claim 1 or 2, wherein the obtaining step comprises a sub-step of recording images of the radioactive area (1) with at least one camera (19), in particular the at least one camera (19) carried by the at least one operator, and a sub-step of determining the digital model using the recorded images.

4. The method according to claim 3, wherein the obtaining step is carried out simultaneously with the intervention step, the digital model being progressively determined or enriched with the images recorded during the intervention step.

5. The method according to any of the preceding claims, wherein the recording of one of the measurements and its materialisation are triggered by the at least one operator, the said discrete holographic symbol (7) materialising the intensity of the radioactive radiation measured by the portable detector (3) at the moment of triggering.

6. The method according to any of the preceding claims, wherein the addition of a discrete holographic symbol (7) to the augmented reality device (5) is triggered when the intensity of the radioactive radiation measured by the portable detector (3) is greater than a predetermined value.

7. The method according to any of the preceding claims, wherein :
- the method comprises a step of recording in the digital model at least one of the following elements associated with corresponding spatial coordinates: ALARA fallback zone, conventional non-nuclear risk ;
- the intervention step comprises a sub-step of materialisation of the at least one element in the augmented reality device (5) by a specific holographic symbol (21) appearing visibly to the operator at the corresponding spatial coordinates.

8. The method according to any of the preceding claims, wherein the digital model is shared by several operators, each operator being equipped with an augmented reality device (5) materialising the recorded measurements by a plurality of discrete holographic symbols (7) using the digital model, each holographic symbol (7) indicating the intensity of the radioactive radiation of one of the recorded measurements and being placed so as to appear visible to said operator at the corresponding spatial coordinates.

9. The method according to claim 8, wherein the operators all intervene in the radioactive zone (1) during the intervention step, the intervention step comprising at least the following sub-steps:
* repeatedly, measurement of an intensity of the radioactive radiation by the portable detector (3) carried by each operator, and determination of the spatial coordinates of the portable detector (3) at the time of the measurement;
* recording in the common numerical model of a plurality of said measurements and the corresponding spatial coordinates.

10. An intervention kit for at least one operator in a radioactive zone (1), the kit comprising :
- an augmented reality device (5) adapted for being carried by the at least one operator;
- a digital model representing the three-dimensional topography of the radioactive zone (1), stored in the augmented reality device (5) of the or each operator or stored in a supervision station (11) or stored in any other adapted digital storage space accessible by the augmented reality (5) devices of all the operators;
- a portable detector (3) for measuring the intensity of radioactive radiation and adapted for being carried by the at least one operator;
- a module (18) for determining the spatial coordinates of the portable detector (3) at the time of each measurement;
- a module (22) for recording in the digital model a plurality of said measurements and the corresponding spatial coordinates;
- a module (24) for materialising the recorded measurements by a plurality of discrete holographic symbols (7) in the augmented reality device (5), using the digital model, configured so that each holographic symbol (7) indicates the intensity of the radioactive radiation of one of the recorded measurements and is placed so as to appear visible to the at least one operator at the corresponding spatial coordinates.
